# EUROPÄISCHE PATENTSCHRIFT

(11) **EP 0 467 879 B1**
(45) Veröffentlichungstag und Bekanntmachung des Hinweises auf die Patenterteilung: **17.05.1995**
(21) Anmeldenummer: 91890154.7
(22) Anmeldetag: 17.07.1991
(51) Int. Cl.: F16H 59/04, F16H 61/26

(54) **Getriebe für eine Zugmaschine mit einer Gangschaltvorrichtung**
Transmission for a tractor with a gear shifting device
Transmission pour tracteur avec dispositif de changement de vitesse

(30) Priorität: 20.07.1990 DE 4023189
(43) Veröffentlichungstag der Anmeldung: 22.01.1992
(73) Patentinhaber: STEYR-DAIMLER-PUCH AKTIENGESELLSCHAFT, 1010 Wien (AT)
(72) Erfinder: Gartner, Helfried, A-3321 Ardagger (AT); Wöntner, Gebhard, A-4493 Wolfern (AT)

(56) Entgegenhaltungen:
- FR-A- 1 238 820
- FR-A- 2 217 943
- US-A- 4 305 308

## Beschreibung

Die Erfindung handelt von einem Getriebe einer Zugmaschine mit einer Gangschaltvorrichtung, welche aus einer seitlich aus dem Getriebe herausragenden drehbaren und verschiebbaren Schaltwelle, und einem außerhalb des Getriebes angeordneten Schalthabel besteht, der mittels eines Schaltgelenkes mit der Schaltwelle verbunden ist. Derartige aus der US-A-4 305 308 bekannte Gangschaltvorrichtungen werden Seitenschaltungen genannt und finden bei Traktoren Verwendung, um die unbequeme Anordnung des Schalthebels zwischen den Knien des Fahrers zu vermeiden. Aus ergonomischen Gründen wird in der Regel der Schalthebel an der rechten Seite des Fahrers angeordnet.

Dazu wurde bis jetzt die Schaltwelle durch einen Mechanismus mit einem am Kabinenboden befestigten Schalthebel verbunden. Ein solcher Mechanismus ist beispielsweise in der DE-A-2 128 172 erkennbar. Bei diesem ist am äußeren Ende der Schaltwelle ein Kurbelarm ausgebildet, in den das unterste Ende des Schalthebels, der etwas darüber in einer am Kabinenboden befestigten Schaltkugel gelagert ist, eingreift.

Bei diesem Mechanismus muß entweder das untere Ende des Schalthebels über ein Schiebegelenk mit dem Kurbelarm der Schaltwelle verbunden sein, oder, wenn das Schiebegelenk zwischen Kurbel und Schalthebel vermieden werden soll, muß der Schalthebel selbst in der Schaltkugel in seiner Längsrichtung auf- und abwärts verschiebbar sein. Nachteilig ist in beiden Fällen, daß der Schalthebel in der elastisch aufgehängten Kabine gelagert ist und Kabinenbewegungen sich in die Schaltung übertragen und zu störenden Bewegungen des Schalthebels führen bzw daß bei Kraftanwendung am Schalthebel die elastisch aufgehängte Kabine ausweicht.

Nachteilig ist weiters, daß durch die elastische Aufhängung der Kabine und das Schiebegelenk (in der Schaltkugel oder an der Kurbel der Schaltwelle) die Schaltung schwergängig und teigig wird. In besonders hohem Maße trifft das zu, wenn der Schalthebel gekrümmt ist (was aus ergonomischen Gründen oft der Fall ist) und deshalb in der Kugel eine Verdrehsicherung notwendig ist.

Weiters ist aus der US-A-4 305 308 eine Seitenschaltung bekannt, bei der der Schalthebel mit seinem unteren Ende in einer Kurbel gelagert ist, deren Welle als Hohlwelle mit der darüber angeordneten Schaltwelle konzentrisch ist. Der Schalthebel ist weiters über ein Gelenk, das auch eine Verschiebung aufnehmen muß, mit der Schaltwelle verbunden. Dadurch entsteht entweder Reibung oder ein durch den Hebelarm vergrößertes Spiel, beides stört das Schaltgefühl. Außerdem wird die Kurbel auf Biegung beansprucht und eine Entkoppelung von Schwingungen ist nicht möglich.

Es ist Aufgabe der Erfindung, diese Nachteile zu vermeiden und eine Schaltung zu schaffen, die unbeeinflußt von der Kabine und doch präzise, leichtgängig und schwingungsarm ist und bei der auch ergonomische Gesichtspunkte berücksichtigt werden können.

Erfindungsgemäß wird das dadurch erreicht, daß das Schaltgelenk eine einzige im wesentlichen parallel zur Getriebelängsrichtung liegende Schwenkachse aufweist, und daß das untere Ende des Schalthebels mittels einer Koppelstange mit dem Getriebegehäuse oder einem an diesem befestigten Teil verbunden ist, wobei die Koppelstange unter der Schaltwelle ungefähr horizontal angeordnet und mit dem Gehäuse beziehungsweise dem Schalthebel durch Kugelgelenke verbunden ist.

Durch das Schaltgelenk mit nur einer Schwenkachse in Getriebelängsrichtung ist der Schalthebel bezüglich der Drehbewegung der Schaltwelle (die zum Einrücken der Gänge führt) mit dieser direkt und praktisch reibungsfrei verbunden. Da weder ein Kugelgelenk für den Schalthebel selbst, noch ein Schiebegelenk, noch eine Verdrehsicherung benötigt wird, ist die Schaltbewegung leichtgängig und präzise.

Das reibungsarme und weitgehend spielfreie Verschieben der Schaltwelle, durch das die Schaltgasse gewählt wird, ist durch die über Kugelgelenke mit dem Schalthebel und dem Getriebegehäuse verbundene Koppelstange gewährleistet.

Durch diese Anordnung wird auch eine Lagerung des Schalthebels im Kabinenboden, die einen besonderen Mechanismus zum Ausgleich der Kabinenbewegung erforderlich macht, vermieden. Der Schalthebel ist ja über die Schaltwelle direkt mit dem Getriebegehäuse verbunden und bildet zusammen mit diesem eine einbaufertige Einheit mit einem Minimum an Bauteilen. Relativbewegungen zwischen Getriebe und Kabine beeinträchtigen die Schaltung somit überhaupt nicht.

Durch die ungefähr horizontale Anordnung der Koppelstange unter der Schaltwelle und deren Verbindung mit dem unteren Ende des Schalthebels über Kugelgelenke werden bei geringstem Aufwand ideale kinematische Verhältnisse geschaffen, was der Leichtgängigkeit und Spielfreiheit der Schaltung zugutekommt.

Durch diese geringfügige Auslenkung der Koppelstange weicht auch die Bahn des Schaltknaufs am oberen Ende des Schalthebels nur geringfügig von der Geraden ab, obwohl die Koppelstange nur kurz ist, wenn das Kugelgelenk, das den Anlenkpunkt am Gehäuse bildet, sich unter der Schaltwelle befindet. Schließlich ist die Koppelstange dadurch gut geschützt neben dem Getriebe angeordnet.

In Abwandlung der Erfindung kann das Kugelgelenk, das den Anlenkpunkt der Koppelstange am Getriebegehäuse bildet, außerhalb der durch Schaltwelle und Schalthebel aufgespannten Ebene liegen, etwa in Fahrtrichtung gesehen, dahinter oder davor. Dadurch verläuft die Bahn des Schaltknaufs bei auf der rechten Seite des Fahrers angeordnetem Schalthebel bei der Einrückbewegung vorwärts-einwärts oder vorwärts-auswärts, je nachdem, was ergonomisch günstiger ist, und die Koppelstange kann länger ausgebildet sein, wodurch die Bahn des Schaltknaufs noch weniger von der Geraden abweicht.

In Ausgestaltung der Erfindung besteht das Schaltgelenk aus einem mit der Schaltwelle fest verbundenen gabelförmigen Körper mit Augen, in denen die Schwenkachse des Schalthebels gelagert ist, wodurch die Schwenkachse und deren Lagerung so dimensioniert werden können, daß auch hohe Drehmomente, die beim Einrücken eines Ganges in einem synchronisierten Getriebe bisweilen auftreten, weitgehend spielfrei in die Schaltwelle eingetragen werden können.

In weiterer Ausgestaltung der Erfindung ist die Schwenkachse mittels aus torsionsweichen hohlzylindrischen Gummiteilen bestehenden Lagern in den Augen gelagert, wobei das Gummilager eine innere Metallhülse und eine äußere Metallhülse umfaßt und wobei die innere Hülse fest mit der Schwenkachse und die äußere Hülse fest mit dem Auge verbunden ist.

Besonders leichte Montage und günstige Kraftverhältnisse werden in einer bevorzugten Ausführungsform erhalten, in der die Schwenkachse aus einem querliegenden und mit dem Schalthebel fest verbundenen Gewinderohrstück mit beiderseits angeordneten Schrauben besteht, die die Innenhülsen der Gummilager kraftschlüssig mit dem Gewinderohrstück verbinden.

Durch im Inneren der Augen angebrachten Anschlagringe läßt sich in weiterer Ausgestaltung der Erfindung der seitliche Ausschlag der Schwenkachse im Gummilager begrenzen. So wird ein hartes Schaltgefühl erreicht, trotzdem ist der Schalthebel schwingungsisoliert, wenn er unbelastet oder nur wenig belastet ist.

In einer weiteren vorteilhaften Ausgestaltung stehen die Gummilager in Umfangsrichtung unter einer Vorspannung, durch die der Schalthebel in der Leerlaufstellung immer in eine bevorzugte Schaltgasse zurückkehrt und es kann auf die üblicherweise zu diesem Zweck, oft sogar außerhalb des Getriebegehäuses vorgesehene Zugfeder verzichtet werden. Die Erfindung handelt naturgemäß auch von einem aus Schaltgetriebe und Gruppengetriebe bestehenden Traktorgetriebe mit mehreren erfindungsgemäßen Schaltungen.

Im folgenden wird eine bevorzugte Ausführungsform des Erfindungsgegenstandes anhand von Abbildungen beschrieben, welche darstellen:
Fig. 1: einen Vertikalschnitt quer zur Fahrtrichtung durch das erfindungsgemäße Getriebe mit Schaltvorrichtung, wobei nur ein Teil des Getriebes zu sehen ist,
Fig. 2: einen Horizontalschnitt nach AA in Fig. 1,
Fig. 3: das Detail B in Fig. 2 vergrößert,
Fig. 4: eine Außenansicht entsprechend Fig. 1, die die Montage der Schaltvorrichtung mit Vorspannung verdeutlicht.

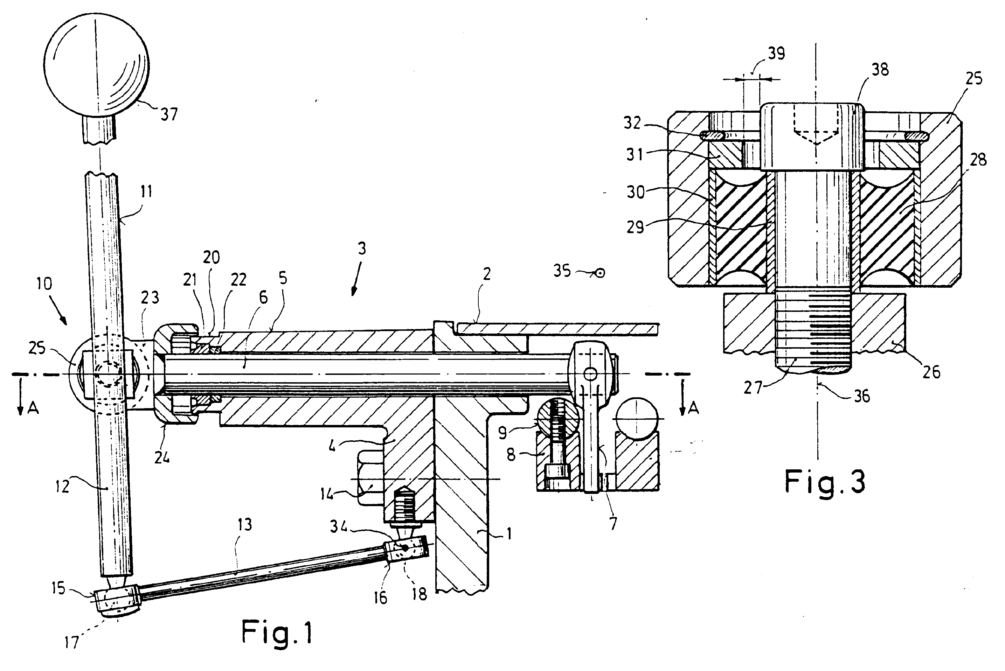

Das Getriebe mit der erfindungsgemäßen Schaltvorrichtung ist in Fig. 1 und 2 nur teilweise dargestellt. Es besteht aus einem Getriebegehäuse 1 mit Getriebedeckel 2, in dem sich in Getriebelängsrichtung 35 die diversen nicht dargestellten Wellen mit Zahnrädern und Schaltgabel 11 befinden. Insoferne handelt es sich um ein vollkommen konventionelles Getriebe, wie es in Traktoren verwendet wird. Im Inneren des Getriebegehäuses befinden sich weiters paralell zu den Getriebewellen angeordnete Schaltstangen 9 mit Mitnehmern 8, in die ein Schaltfinger 7 eingreift. Um die seitliche Anordnung des Schalthebels zu ermöglichen, ist quer zur Richtung der Schaltstangen 9 eine Schaltwelle 6 angeordnet, auf der fest der Schaltfinger oder mehrere Schaltfinger 7 angebracht sind. Die Schaltwelle ist in einem Führungsrohr 5, das Teil einer am Getriebegehäuse 1 mittels einer Grundplatte 4 und Schrauben 14 angeschraubten Schaltkonsole 3 ist, verdrehbar und verschiebbar gelagert. Sie kann auch noch in der nicht dargestellten anderen Seitenwand des Getreibes gelagert sein.

Die erfindungsgemäße Schaltvorrichtung besteht aus der Schaltwelle 6, einem Schaltgelenk 10, einem Schalthebel 11 und einer Koppelstange 13. Die Schaltwelle 6 ist im Führungsrohr 5 gelagert und durch einen Dichtring 22 und einen Abstreifring 21 gegenüber diesem abgedichtet und ragt aus diesem heraus. Am vorderen Ende der Schaltwelle 6 befindet sich das Schaltgelenk 10, dessen gabelförmgier Körper 23 mit dem äußeren Ende der Schaltwelle fest, beispielsweise durch Schweißen, verbunden ist und einen napfförmigen Abweiser 24 bildet, der einen Kragen 20 des Führungsrohres 5 übergreift. An den beiden Enden des gabelförmigen Gelenkskörpers 23 sind Augen 25 ausgebildet, in denen die Schwenkachse 36 auf noch zu beschreibende Weise gelagert ist. Die Schwenkachse 36 besteht, wie in Fig. 2 erkennbar, aus einem Gewinderohrstück 26, das vom Schalthebel 11 durchsetzt und mit ihm fest, etwa durch Schweißen verbunden ist und an dessen beiden Stirnseiten mittels Schrauben 27, Gummilager 28 befestigt sind. Der Schalthebel 11 ist um diese Schwenkachse 36 schwenkbar.Er setzt sich über diese Schwenkachse 36 hinaus im unteren Teil 12 fort, an desssen Ende sich ein Kugelkopf 17 befindet, der mit einem Gelenkkopf 15 der Koppelstange 13 gelenkig verbunden ist. Der andere Gelenkkopf 16 der Koppelstange 13 übergreift einen Kugelkopf 18, der an der Grundplatte 4 der Schaltkonsole 3 befestigt ist, aber auch am Getriebegehäuse 1 selbst befestigt sein könnte. Der Schalthebel ist somit exakt und weitgehend reibungsfrei am Getriebe selbst geführt.

In dem in den Fig. 1, 2 dargestellten Ausführungsbeispiel ist die Kopelstange 13 ungefähr paralell zur Schaltwelle 6 und Schaltwelle 6, Schalthebel 11 und Koppelstange 13 liegen ungefähr in einer vertikalen Ebene. Bei einer Bewegung des Schaltknaufs 37 quer zur Fahrtrichtung, also in Verschieberichtung der Schaltwelle 6, wirkt der Schalthebel 11, 12 als einarmiger Hebel, dessen unterer Gelenkkopf 15 sich über die Koppelstange 13 an der Schaltkonsole 3 und somit am Gehäuse 1 abstützt, und der über die Schwenkachse 36 des Schaltgelenkes 10 die Schaltwelle 6 verschiebt, wodurch der Schaltfinger 7 am anderen Ende der Schaltwelle 6 in den einen oder anderen Mitnehmer 8′ eingreift, womit die Schaltgasse gewählt wird. Wird sodann zum Einrücken des Ganges in der gewählten Schaltgasse der Schaltknauf 37 in Richtung der Fahrzeuglängsachse 35 bewegt, so wirkt der Schalthebel 11 über die Schwenkachse 36 auf die Schaltwelle 6 wie eine Kurbel. Durch die endliche Länge der Koppelstange 13, wird der Kugelkopf 17 am unteren Ende des Schalthebels 12 dabei von dieser seitlich abgelenkt, wodurch der Schalthebel auch in Querrichtung geringfügig nach der Seite verschwenkt wird. Diese Abweichung wird aber vom Fahrer in der Regel gar nicht wahrgenommen.

Wenn der Kugelkopfmittelpunkt 34 aus der durch Schaltwelle 6, Schalthebel 11, 12 und Koppelstange 13 aufgespannten Ebene heraus verlegt wird, wird ohne sonstige geometrische Änderungen erreicht, daß die Schaltbewegung in Getriebelängsrichtung nicht mehr genau in dieser Längsrichtung sondern schräg erfolgt. Bei einer an der rechten Seite des Getriebes angeordneten Seitenschaltung wird sich daher bei nach hinten verlegten Kugelkopfmittelpunkt 34′ der Schaltknauf 37 bei Bewegung in Fahrtrichtung stark gegen die Mitte zu abgelenkt werden. Dadurch ergibt sich ein ergonomisch besonders günstiger Bewegungsverlauf der Schalthand.

In Fig. 3 ist die Verbindung zwischen Schwenkachse 36 bzw. den Schrauben 27 und den Augen 25 des Schaltgelenkkörpers 23 genauer dargestellt. Das Gummilager besteht aus einem hohlzylindrischen, an den Stirnkanten einwärts gewölbten Gummikörper 28, der von einer inneren Hülse 29 und einer äußeren Hülse 30 begrenzt ist. Die innere Hülse 29 wird durch den Kopf 38 der Schraube 27 gegen das Gewinderohrstück 26 festgespannt. Die äußere Hülse 30 ist in das Auge 25 eingepreßt. Auf diese Weise sind beide Hülsen 29, 30 des Gummilagers 28 auch drehfest mit der Schwenkachse 36 bzw. dem Auge 25 verbunden, sodaß bei der Schwenkbewegung des Schalthebels 11 in Querrichtung die Winkeländerung zwischen Schalthebel 11 und Schaltwelle 6 und die daraus folgende Verdrehung der beiden Hülsen 29, 30 gegeneinander vom Gummikörper 28 aufgenommen wird. Bei dem beschriebenen Gummilager handelt es sich um ein gebräuchliches, in großen Stückzahlen hergestelltes und daher billiges Maschinenelement hoher Verschleißfestigkeit. Um den Ausschlag des Schalthebels gegenüber dem Gelenkskörper 23 bei Kraftanwendung zu begrenzen, ist in dem Auge 25 ein Anschlagring 31 angeordnet, der nach Überwindung eines Spiels 39 am Kopf 38 der Schraube 27 anliegt und so die Bewegung begrenzt. Zur Sicherung ist dieser Anschlagring 31 noch mit einem Federring 32 axial festgelegt.

Durch die Elastizität des Gummilagers 28 auch in Umfangsrichtung, kann es sogar vorgespannt eingebaut werden, ohne daß dazu ein höherer Montageaufwand erforderlich wäre.

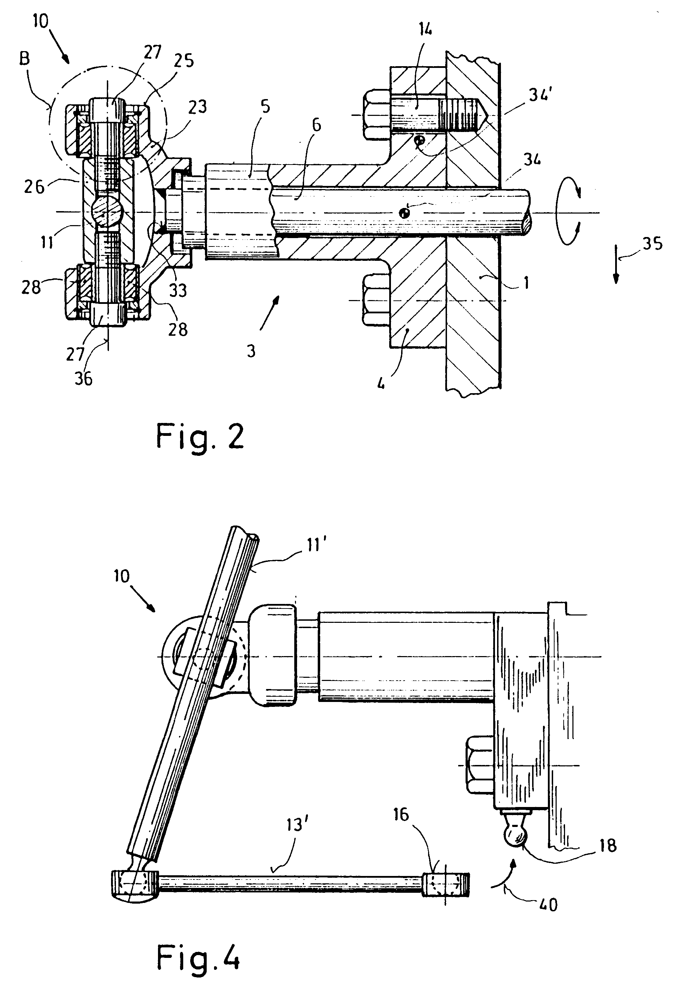

Bei der normalen Montage des Schalthebels im Schaltgelenk wird so vorgegangen: Das Gummilager 28 wird mit seinem Außenring 30 in das Auge 25 eingepreßt und gegebenenfalls in beiden Augen die Ringe 31, 32 montiert. Sodann wird das bereits fest mit dem Schalthebel verbundene Gexinderohrstück 26, zwischen die innerern Hülsen 29 eingelegt und von außen die beiden Schrauben 27 eingeführt. Dann werden die beiden Gelenkköpfe 15, 16 der Koppelstange 13 auf die Kugelköpfe 17, 18 aufgeklipst und schließlich die Schrauben 27 angezogen. Der Schalthebel ist damit eingebaut. Soll das Gummilager 28 mit Vorspannung eingebaut werden, so verläuft der Montagevorgang entsprechend Fig. 4 folgendermaßen: Der Schalthebel 11 wird in der dort dargestellten Stellung 11′, also noch bevor der Gelenkkopf 15 auf den Kugelkopf 18 aufgesetzt ist, mittels der Schrauben 27 festgespannt und dann erst - und dadurch entsteht die Vorspannung - wird der Gelenkkopf 16 nach rechts (Pfeil 40) gezogen und auf den Kugelkopf 18 aufgeklipst.

Von dem beschriebenen Ausührungsbeispiel kann im Rahmen der Erfindung in vielerlei Hinsicht abgewichen werden. So kann die Koppelstange 13 auch über des Schaltwelle 6 angeordnet und mit einem am Gehäuse 1 bzw. Gehäusedeckel 2 über der Schaltwelle befestigten Kugelkopf 18 verbunden sein, wodurch der Schalthebel 11 in beiden Bewegungsrichtungen als einarmiger Hebel wirkt. Das kann beispielweise bei geänderter Länge der Schaltstangen, etwa bei der Änderung des Schaltschemas bei einem vorhandenen Getriebe, vorteilhaft sein. Außerdem können die kinematischen Verhältnisse durch geeignete Wahl der Abmessungen, Winkel und Formen der Teile der kinematischen Kette 6, 11, 12, 13, 1 verschiedenen konstruktiven und ergonomischen Erfordernissen angepaßt werden.

Schließlich kann Dank der Erfindung der Schalthebel 11 beliebig geformt, also auch stark gekrümmt sein. Auch die Schaltwelle 6 muß nicht unbedingt horizontal angeordnet sein. Schließlich liegt auch ein Getriebe mit mehreren Schalthebeln mit erfindungsgemäßer Schaltvorrichtung im Rahmen der Erfindung.

## Patentansprüche

1. Getriebe einer Zugmaschine mit einer Gangschaltvorrichtung, welche aus einer seitlich aus dem Getriebe herausragenden drehbaren und verschiebbaren Schaltwelle, und einem außerhalb des Getriebes angeordneten Schalthebel besteht, der mittels eines Schaltgelenkes (10) mit der Schaltwelle (6) verbunden ist, **dadurch gekennzeichnet**, daß das Schaltgelenk (10) eine einzige im wesentlichen parallel zur Getriebelängsrichtung (35) liegende Schwenkachse (36) aufweist, und daß das untere Ende (12) des Schalthebels (11) mittels einer Koppelstange (13) mit dem Getriebegehäuse (1) oder einem an diesem befestigten Teil (3) verbunden ist, wobei die Koppelstange (13) unter der Schaltwelle (6) ungefähr horizontal angeordnet und mit dem Gehäuse (1,3) beziehungsweise dem Schalthebel (11) durch Kugelgelenke (15,16) verbunden ist.

2. Getriebe nach Anspruch 1, **dadurch gekennzeichnet,** daß die Koppelstange (13) am Gehäuse (1,3) an einem Punkt angelenkt ist, der in Fahrtrichtung außerhalb der durch Schaltwelle (6) und dem Schalthebel (11) aufgespannten Ebene liegt.

3. Getriebe nach Anspruch 1, **dadurch gekennzeichnet**, daß das Schaltgelenk (10) aus einem mit der Schaltwelle (11) fest verbundenen gabelförmigen Körper (23) mit Augen (25) besteht, in denen die Schwenkachse (36) des Schalthebels (11) gelagert ist.

4. Getriebe nach Anspruch 3, **dadurch gekennzeichnet,** daß die Schwenkachse (36) mittels aus torsionsweichen hohlzylindrischen Gummiteilen (28) bestehenden Lagern in den Augen (25) gelagert ist, wobei das Gummilager (28) eine innere Metallhülse (29) und eine äußere Metallhülse (30) aufweist, und wobei die innere Hülse (29) fest mit der Schwenkachse und die äußere Hülse (30) fest mit dem Auge (25) verbunden ist.

5. Getriebe nach Anspruch 4, **dadurch gekennzeichnet,** daß die Schwenkachse (36) aus einem querliegenden und mit dem Schalthebel (11) fest verbundenen Gewinderohrstück (26) und beiderseits darin angebrachten Schrauben (27) besteht, die die Innenhülse (29) kraftschlüssig mit dem Gewinderohrstück (26) verbinden.

6. Getriebe nach Anspruch 4, **dadurch gekennzeichnet,** daß im Inneren der Augen (25) Anschlagringe (31) angebracht sind, die den seitlichen Anschlag der Schwenkachse (36) begrenzen.

7. Getriebe nach Anspruch 4, **dadurch gekennzeichnet**, daß das Gummilager (28) in Umfangsrichtung vorgespannt ist.

## Claims

1. Gearbox for an agricultural tractor with a gear shifting device comprising a rotatable and reciprocatable shifting shaft protruding laterally from the gearbox and a shifting lever positioned outside the gearbox, which shifting lever is connected with the shifting shaft (6) by a shifting joint (10) **caracterised** in that the shifting joint (10) comprises a single tilting axis (36) essentially parallel to the longitudinal direction (35) of the gearbox, and that the lower part (12) of the shifting lever (11) is linked to the gearbox casing (1), or an element (3) fastened to the casing, by a tie rod (13), the tie rod (13) being positioned approximately horizontally underneath the shifting shaft (6) and connected with the casing (1,3) and the shifting lever (11) by ball joints (15,16).

2. Gearbox according to claim 1, **caracterised** in that the tie rod (13) is connected with the casing (1,3) at a location offset from the plane defined by the shifting shaft (6) and the shifting lever (11) in the direction of travel.

3. Gearbox according to claim 1, **caracterised** in that the shifting joint (10) comprises a forkshaped body (23) with two eyes (25) fastened to the shifting shaft (6) and the tilting axis (36) of the shifting lever (11) journalled in the eyes (25).

4. Gearbox according to claim 3, **caracterised** in that the tilting axis (36) is journalled in the eyes (25) by torsionally elastic rubber elements (28) of hollow-cylindrical shape, the rubber elements (28) being provided with an inner (29) and an outer (30) metallic bushing, the inner bushing (29) being fastened to the tilting axis and the outer bushing (30) being fastened to the eye (25).

5. Gearbox according to claim 4, **caracterised** in that the tilting axis (36) comprises a transversely positioned threaded tube (26) fastened to the shifting lever and screws (27) inserted from both sides, the screws (27) frictionally securing the inner bushing (29) to the threaded tube (26).

6. Gearbox according to claim 4, **caracterised** in that stop rings (31) limiting lateral movement of the tilting axis (36) are provided in the eyes (25).

7. Gearbox according to claim 4, **caracterised** in that the rubber elements (28) are circumferentially prestressed.

## Revendications

1. Boite de vitesses d'un tracteur avec dispositif de changement de vitesses, comportant un arbre de changement rotatif et coulissant faisant saillie du coté latéral de la boite, et un levier de changement de vitesses disposé à l'extérieur de la boite et relié à l'arbre de changement (6) par l'intermédiaire d'un joint de changement (10), **caractérisée** en ce que le joint de changement (10) comprend un axe de pivotement (36) unique essentiellement parallèle à la direction longitudinale (35) de la boite, et en ce que l'extrémité inférieure (12) du levier de changement (11) est reliée au carter (1) de la boite, oubien à un élément (3) relié à ce dernier, par moyen d'une barre de couplage (13), la barre de couplage (13) étant disposée dans une direction sensiblement horizontale en dessous de l'arbre de changement (6) et étant reliée au carter (1,3) et au levier de changement (11), respectivement, par moyen de joints sphériques (15,16).

2. Boite de vitesses selon la revendication 1, **caractérisée** en ce que la barre de couplage (13) est articulée à un point du carter (1,3) situé en direction de marche devant ou- bien derrière un plan défini par l'arbre de changement (6) et le levier de changement (11).

3. Boite de vitesses selon la revendication 1, **caractérisée** en ce que le joint de changement (10) comporte une fourchette (23) pourvue d'oeillets (25) reliée à demeure à l'arbre de changement (6), l'axe de pivotement (36) du levier de changement (11) étant logé dans les oeillets (25).

4. Boite de vitesses selon la revendication 3, **caractérisée** en ce que l'axe de pivotement (36) est logé dans les oeillets (25) par moyen d'éléments en caoutchouc (28) en forme de cylindre creux et mou à la torsion, les éléments en caoutchouc (28) comportant une douille métallique intérieure (29) et extérieure (30) dont la douille intérieure (29) est reliée à demeure à l'axe de pivotement et la douille extérieure (30) à l'oeillet (25).

5. Boite de vitesses selon la revendication 1, **caractérisée** en ce que l'axe de pivotement (36) est constitué d'un tuyau fileté (26) transversal fixé au levier de changement (11) et deux vis (27) disposés des deux cotés du tuyau fileté (26) reliant la douille intérieure (29) au tuyau fileté (26) par serrage.

6. Boite de vitesses selon la revendication 1, **caractérisée** en ce que des bagues de butée (31) limitant le débattement latéral de l'axe de pivotement (36) sont disposées à l'intérieur des oeillets (25).

7. Boite de vitesses selon la revendication 1, **caractérisée** en ce que les éléments en caoutchouc (28) sont précontraints en direction circonférentielle.
